# EUROPEAN PATENT APPLICATION

(11) **EP 4 840 767 A1**
(43) Date of publication of application: **18.11.2026**
(21) Application number: 25176175.5
(22) Date of filing: 13.05.2025
(51) Int. Cl.: B64G 1/64

(54) **SPACECRAFT DOCKING SYSTEMS AND METHOD**

(71) Applicant: ClearSpace Holding SA, 1273 Luxembourg (LU)
(72) Inventor: GHITA, Mohamed, L-1911 Luxembourg (LU); VON ROHR, Sébastien, 1020 Renens (CH); ANTONELLO, Andrea, London, E1 1XL (GB)
(74) Representative: ABREMA SA

(57) **Abstract**

There is described a spacecraft docking system (D) for and method of capturing and coupling a target spacecraft (T) to a servicing spacecraft (S) provided with the spacecraft docking system (D), the target spacecraft (T) having a capture feature, such as a ring interface structure (RIS). According to a first aspect of the invention, the spacecraft docking system (D) includes an actuatable docking platform (DP) configured to cooperate with the capture feature (RIS) of the target spacecraft (T) to perform a docking operation between the servicing spacecraft (S) and the target spacecraft (T). According to this first aspect of the invention, the spacecraft docking system (D) further includes a supporting platform (AP) provided on a base platform (PL) of the servicing spacecraft (S), the supporting platform (AP) being coupled to the actuatable docking platform (DP) so as to allow a multi-degree-of-freedom displacement of the actuatable docking platform (DP) with respect to the base platform (PL). This supporting platform (AP) comprises a plurality of supporting actuators (100) designed to operate as actuatable prismatic joints, each of the supporting actuators (100) being coupled, at a first end (a), to the base platform (PL) and, at a second end (b), to the actuatable docking platform (DP). Additionally, the actuatable docking platform (DP) comprises a plurality of end platforms (EP), each carrying an end effector (EF) configured to interact with the capture feature (RIS) of the target spacecraft (T), and a corresponding plurality of docking actuators (200) designed to operate as actuatable prismatic joints, each of the docking actuators (200) being coupled between a corresponding pair of said end platforms (EP) to form a polygonal arrangement. Furthermore, each end platform (EP) is coupled to the second end (b) of a corresponding set of said supporting actuators (100).

## Description

### TECHNICAL FIELD

The present invention generally relates to spacecraft docking systems for and a method of capturing and coupling a target spacecraft to a servicing spacecraft that is provided with the spacecraft docking system, the target spacecraft having a capture feature, in particular an annular or circular capture feature such as a ring interface structure. More specifically, the invention relates to such spacecraft docking systems and method wherein the spacecraft docking system includes an actuatable docking platform configured to cooperate with the capture feature of the target spacecraft to perform a docking operation between the servicing spacecraft and the target spacecraft.

### BACKGROUND OF THE INVENTION

Various spacecraft docking systems and methods are known in the art.

International (PCT) Publication No. WO 2021/123632 A1 (see also related European Patent No. EP 3 962 816 B1 and U.S. Patent Publication No. US 2022/0388696 A1) discloses such a spacecraft docking system wherein the actuatable docking platform is coupled to and supported by a supporting platform provided on a base platform of the servicing spacecraft, the supporting platform including a set of six articulated link arms connecting the actuatable docking platform to the base platform so as to allow a displacement of the actuatable docking platform in six degrees of freedom (6-DoF) relative to the base platform and, therefore, the servicing spacecraft. Each articulated link arm comprises first and second straight and rigid rods, namely a first rod comprising a first end connected to the actuatable docking platform by a first spherical joint and a second end connected to the second rod by a second spherical joint, the second rod being rotatably supported onto the base platform so as to pivot about an axis. Furthermore, each articulated link arm is coupled to a magnetic damper having a stator fixedly mounted relative to the base platform and a rotor rotatable relative to the stator, the rotor being coupled to the second rod. In this case, the essential purpose of the supporting platform is to act as a damping and positioning arrangement. The magnetic damper may however be operated in an actuator mode in which the magnetic damper is controlled so as to cause movement of the link arms, namely by selectively rotating the second rod thereof.

According to the solution disclosed in International (PCT) Publication No. WO 2021/123632 A1, the actuatable docking platform comprises a set of six retaining rods distributed circularly around a periphery of the actuatable docking platform, the retaining rods being selectively pivotable about a corresponding tangential axis under the action of an actuator comprising an actuation system with pulleys and belts to allow simultaneous pivoting of the retaining rods. More specifically, the retaining rods are designed to capture the engine exhaust nozzle of the target spacecraft (such as the nozzle of a liquid apogee engine). Furthermore, a locking device suitable for establishing and maintaining a rigid connection between the two spacecrafts is provided. This locking device preferably consists of a locking arrangement comprising four actuatable outer retaining members that are distributed about a central axis of the actuatable docking platform, each outer retaining member exhibiting two degrees of freedom (namely a movement in a radial direction and a movement in an axial direction) in order to be able lock onto the outer side of engine exhaust nozzles exhibiting different outer diameters.

The solution disclosed in International (PCT) Publication No. WO 2021/123632 A1 is relatively complex and cumbersome. Furthermore, while it is alternatively contemplated that the actuatable docking platform may be designed to cooperate with a ring interface structure (such as a launch adapter/interface ring, or LAR/LIR), no solution is disclosed that would be adapted to robustly interact with such a ring interface structure.

International (PCT) Publication No. WO 2024/013570 A1 discloses another spacecraft docking system for and method of capturing and coupling a target spacecraft to a servicing spacecraft, which similarly relies upon the engine exhaust nozzle of the target spacecraft as a means to dock the servicing spacecraft onto the target spacecraft.

International (PCT) Publication No. WO 2016/030890 A1 (see also related European Patent No. EP 3 186 151 B1 and U.S. Patent No. US 10,611,504 B2) discloses a spacecraft docking system and method that rely upon the use of a plurality of articulated docking/gripping arms each consisting of a multiple bar linkage assembly including a first crank pivotably connected to a side of a body of the servicing spacecraft, a second crank pivotably connected to the side of the body of the servicing spacecraft and spaced apart from the first crank, and an operational arm pivotably connected at a first location to the first crank and pivotably connected at a second location to the second crank. A distal end of each operational arm is provided with an end effector acting as gripping end designed to cooperate with an outer side of a ring interface structure of the target spacecraft. In the embodiments shown in International (PCT) Publication No. WO 2016/030890 A1, four articulated docking/gripping arms are contemplated in order to interact with four different points about the circumference of the ring interface structure.

The solution disclosed in International (PCT) Publication No. WO 2016/030890 A1 is likewise relatively complex and cumbersome. Especially, the positioning of the docking/gripping arms partly along the sides of the servicing spacecraft compromises compactness in the stowed configuration, which negatively impacts the volume required for launch of the servicing spacecraft. This solution furthermore suffers from the fact that a rigid connection between the servicing spacecraft and target spacecraft is hard to achieve as the sole connection points between the servicing spacecraft and target spacecraft are the relevant points on the ring interface structure where the gripping end of the articulated docking/gripping arms interacts with the ring interface structure. In effect, this solution is designed to specifically allow the servicing spacecraft to tilt relative to the target spacecraft even after docking is completed to adjust a thrust vector.

Spacecraft docking systems and methods relying on so-called Stewart-Gough platforms to compensate for positional misalignment during the docking procedure are also known in the art, for instance from U.S. Patents Nos. US 4,809,936 A, US 6,354,540 B1 and US 7,543,779 B1. According to such systems, a plurality of (i.e. six) supporting actuator/attenuator units arranged in pairs are provided between a base platform of the spacecraft (or space module) and an interface ring located forward of the base platform to act as a berthing mechanism. The supporting actuator/attenuator units are designed to operate as prismatic joints to thrust the interface ring and associated berthing elements outward from the base platform. The supporting actuator/attenuator units are controllable to assist in placing the interface ring and its associated parts against the interface ring of another spacecraft or space module during a docking operation. In this context, the supporting actuator/attenuator units are operated to initially extend the interface ring outward from the base platform, the supporting actuator/attenuator units also acting as shock absorbers during the docking (berthing) procedure. Shortly after the docking (berthing) procedure is performed and the two interface rings are coupled one to the other, the supporting actuator/attenuator units can be retracted to secure the connection between the two spacecrafts/space modules.

This solution forms the basis for NASA's Low Impact Docking System (LIDS) and the NASA Docking System (NDS) as currently used as standard docking system on the International Space Station (ISS) (see also *"*Low Impact Docking System (LIDS)", Tobie E. LaBauve, Johnson Space Center, Document ID 20090007783, February 1st, 2009, as well as *"*Overview of the NASA Docking System and the International Docking System Standard", George Parma, AIAA Annual Technical Symposium, May 20th, 2011).

Strictly speaking, the implementation of the LIDS/NDS requires two mating and mutually cooperating interfaces to perform and complete the docking/berthing procedure, and one interface alone is not capable of capturing and coupling a target spacecraft to a servicing spacecraft.

There therefore remains a need for an improved solution.

### SUMMARY OF THE INVENTION

A general aim of the invention is to remedy the above-noted shortcomings of the prior art.

More precisely, an aim of the present invention is to provide a spacecraft docking system and method that can reliably establish a rigid connection between a servicing spacecraft and a target spacecraft via a suitable capture feature, in particular a ring interface structure (such as a launch adapter/interface ring, or LAR/LIR) of the target spacecraft, thereby achieving compatibility with any target spacecraft provided with such a capture feature.

A further aim of the invention is to provide such a solution that allows for an appropriate damping of relative motion between the servicing spacecraft and the target spacecraft during docking.

Another aim of the invention is to provide such a solution that allows for a soft capture of the target spacecraft to be carried out prior to establishing a rigid connection between the servicing spacecraft and the target spacecraft.

A further aim of the invention is to provide such a solution that helps establishing a robust rigid connection between the servicing spacecraft and the target spacecraft.

Yet another aim of the invention is to provide such a solution that is suited to repeatedly carry out docking and release sequences of the servicing spacecraft with target spacecrafts, moreover in a reliable manner.

A further aim of the invention is also to provide such a solution that ensures that the servicing spacecraft can be reliably released from the target spacecraft once the on-orbit servicing operation has been completed.

Another aim of the invention is to provide such a solution that exhibits great compactness and a low mass, and that is moreover cost-efficient to produce and operate, without compromising reliability.

These aims and others are achieved thanks to the solutions defined in the claims.

There is accordingly provided, according to a first aspect of the invention, a spacecraft docking system, the features of which are recited in claim 1, namely, a spacecraft docking system for capturing and coupling a target spacecraft to a servicing spacecraft that is provided with the spacecraft docking system, the target spacecraft having a capture feature (such as but not limited to a ring interface structure). The spacecraft docking system includes an actuatable docking platform configured to cooperate with the capture feature of the target spacecraft to perform a docking operation between the servicing spacecraft and the target spacecraft. The spacecraft docking system further includes a supporting platform provided on a base platform of the servicing spacecraft, the supporting platform being coupled to the actuatable docking platform so as to allow a multi-degree-of-freedom (multi-DoF) displacement of the actuatable docking platform with respect to the base platform. According to this first aspect of the invention, the supporting platform comprises a plurality of supporting actuators designed to operate as actuatable prismatic joints, each of the supporting actuators being coupled, at a first end, to the base platform and, at a second end, to the actuatable docking platform. Additionally, the actuatable docking platform comprises a plurality of end platforms, each carrying an end effector configured to interact with the capture feature of the target spacecraft, and a corresponding plurality of docking actuators designed to operate as actuatable prismatic joints, each of the docking actuators being coupled between a corresponding pair of said end platforms to form a polygonal arrangement. Furthermore, each end platform is coupled to the second end of a corresponding set of said supporting actuators.

By way of preference, the supporting platform includes a total of six said supporting actuators arranged in three pairs, and the actuatable docking platform includes a total of three said end platforms and a total of three said docking actuators arranged in a triangular configuration on top of the supporting platform.

In accordance with one embodiment of this first aspect of the invention, the first end of each of the supporting actuators is connected to the base platform via a universal joint, while the second end of each of the supporting actuators is connected to the associated end platform via a spherical joint.

Each of the supporting actuators and docking actuators may in particular include an electromechanical linear actuator.

According to a second aspect of the invention, there is provided a spacecraft docking system, the features of which are recited in independent claim 5, namely, a spacecraft docking system for capturing and coupling a target spacecraft to a servicing spacecraft that is provided with the spacecraft docking system, the target spacecraft having a capture feature (such as but not limited to a ring interface structure). The spacecraft docking system includes an actuatable docking platform configured to cooperate with the capture feature of the target spacecraft to perform a docking operation between the servicing spacecraft and the target spacecraft. The spacecraft docking system further includes a supporting platform provided on a base platform of the servicing spacecraft to support the actuatable docking platform. According to this second aspect of the invention, the actuatable docking platform comprises a plurality of end platforms coupled to the supporting platform, each carrying an end effector configured to interact with the capture feature of the target spacecraft, and a corresponding plurality of docking actuators designed to operate as actuatable prismatic joints, each of the docking actuators being coupled between a corresponding pair of said end platforms to form a polygonal arrangement. Furthermore, the docking actuators are actuatable to adjust a position of the end effectors relative to the capture feature.

By way of preference, the actuatable docking platform according to this second aspect of the invention includes a total of three said end platforms and a total of three said docking actuators arranged in a triangular configuration.

According to this second aspect of the invention, each of the docking actuators may in particular include an electromechanical linear actuator.

By way of preference, the capture feature is an annular or circular capture feature, such as a ring interface structure, and the docking actuators are actuatable jointly to adjust a nominal diameter of the actuatable docking platform and of the end effectors relative to a diameter of the capture feature, which features are applicable to both of the aforementioned first and second aspects of the invention.

In this latter context, according to one embodiment of the invention, which is of relevance for both of the first and second aspects thereof, each of the end effectors may especially be configured to interact with an inner side of the capture feature, and the docking actuators are actuatable jointly so that the nominal diameter of the actuatable docking platform and of the end effectors is adjusted to a first diameter allowing insertion of the end effectors inside the capture feature, within an operating range of the end effectors. In such case, the docking actuators are actuatable jointly so that the nominal diameter of the actuatable docking platform and of the end effectors can be increased from the first diameter to cause the end effectors to interact radially with the inner side of the capture feature.

According to another embodiment of the invention, which may potentially be combined with the embodiment mentioned in the previous paragraph, which is likewise of relevance for both of the first and second aspects thereof, each of the end effectors is configured to interact with an outer side of the capture feature, and the docking actuators are actuatable jointly so that the nominal diameter of the actuatable docking platform and of the end effectors is adjusted to a first diameter allowing insertion of the capture feature between the end effectors, within an operating range of the end effectors. In such case, the docking actuators are actuatable jointly so that the nominal diameter of the actuatable docking platform and of the end effectors can be decreased from the first diameter to cause the end effectors to interact radially with the outer side of the capture feature.

By way of preference, each of the end effectors includes a clamping element designed to interact with the capture feature, and each clamping element is movably supported on the associated end platform so that radial interaction of the clamping elements with the capture feature, upon performing the docking operation, causes retraction of the clamping elements toward the end platforms, thereby bringing the ring interface structure in abutment with the actuatable docking platform, leading to a secure connection between the capture feature and the actuatable docking platform.

In this latter context, each clamping element may especially be movably supported on the associated end platform so as to slide along an inclined plane upon radial interaction of the clamping elements with the capture feature.

In accordance with one embodiment of the invention, a first end of each of the docking actuators is connected to a first end platform of the associated pair of end platforms via a fixed joint, while a second end of each of the docking actuators is connected to a second end platform of the associated pair of end platforms via a revolute joint.

By way of preference, the actuatable docking platform is configured such that a clearance can be created inside the polygonal arrangement of the end platforms and docking actuators, the clearance being large enough to accommodate an engine exhaust nozzle of the target spacecraft.

Also claimed pursuant to claim 15 is a method of capturing and coupling a target spacecraft to a servicing spacecraft, the target spacecraft having a capture feature, in particular an annular or circular capture feature such as a ring interface structure, the method comprising the following steps:
- providing the servicing spacecraft with a spacecraft docking system in accordance with the invention;
- manoeuvring the servicing spacecraft to perform a rendezvous with the target spacecraft;
- positioning the servicing spacecraft relative to the target spacecraft to bring the capture feature of the target spacecraft within operating range of the spacecraft docking system;
- positioning the actuatable docking platform of the spacecraft docking system relative to the capture feature of the target spacecraft to bring the capture feature of the target spacecraft within operating range of the actuatable docking platform; and
- actuating the actuatable docking platform to cooperate with the capture feature of the target spacecraft.

Further advantageous embodiments of the invention are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figure 1 is a schematic perspective view of a spacecraft docking system according to a preferred embodiment of the invention, the spacecraft docking system being shown in a partly extended state;
Figure 1A is a schematic side view of the spacecraft docking system of Figure 1;
Figure 1B is a schematic top view of the spacecraft docking system of Figures 1 and 1A;
Figure 2 is a schematic perspective view of the spacecraft docking system of Figures 1 and 1A-B shown in a stowed configuration;
Figure 2A is a schematic side view of the spacecraft docking system of Figure 2;
Figure 2B is a schematic top view of the spacecraft docking system of Figures 2 and 2A;
Figure 3 shows various schematic perspective views of the spacecraft docking system of Figures 1, 1A-B, 2 and 2A-B in various configurations depending on an actuation state of a supporting platform and docking platform of the spacecraft docking system;
Figures 4A to 4J show various actuation states of a spacecraft docking system in accordance with another embodiment of the invention, in perspective view (left portion), side view (upper-right portion) and top view (lower-right portion), illustrating an unstowing manoeuvre (Figures 4A-B), a raising manoeuvre (Figures 4C-D), a centering/alignment manoeuvre (Figures 4E-H), and a docking manoeuvre (Figures 4I-J); and
Figure 5 schematically shows various actuation sates of an actuatable docking platform of a spacecraft docking system in accordance with a preferred embodiment of the invention, the actuatable docking platform including retractable clamping elements that interact with an annular capture feature of the target spacecraft, namely a capture feature in the form of a ring interface structure, during the docking operation to bring it in abutment with the actuatable docking platform with a view to establish a secure connection between the ring interface structure and the actuatable docking platform.

### DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein as reflected in the appended claims.

As described herein, when two or more parts or components are described as being connected, attached, secured or coupled to one another, they can be so connected, attached, secured or coupled directly to each other or through one or more intermediary parts.

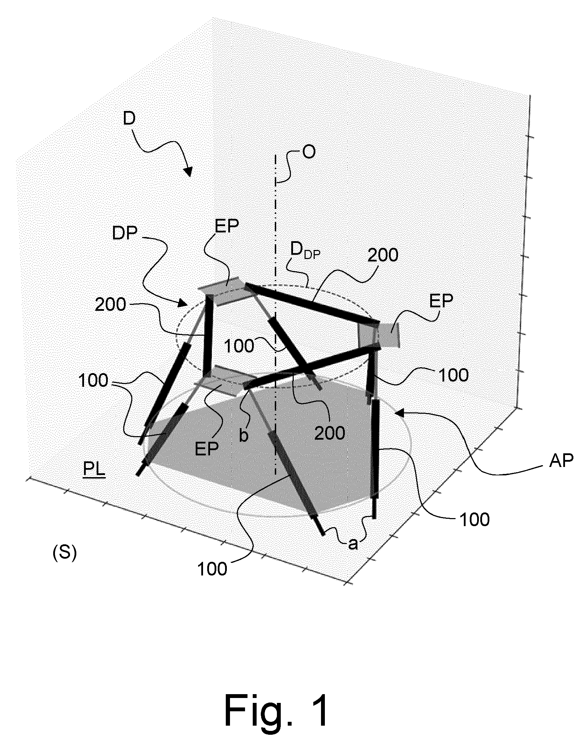

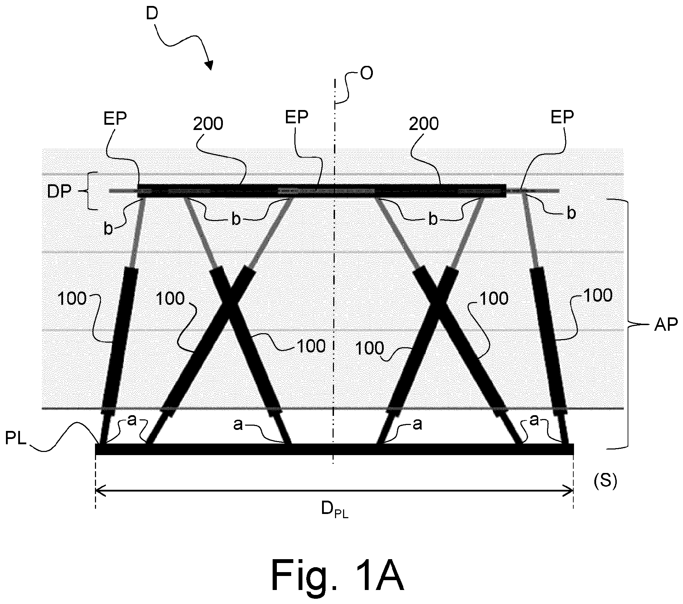

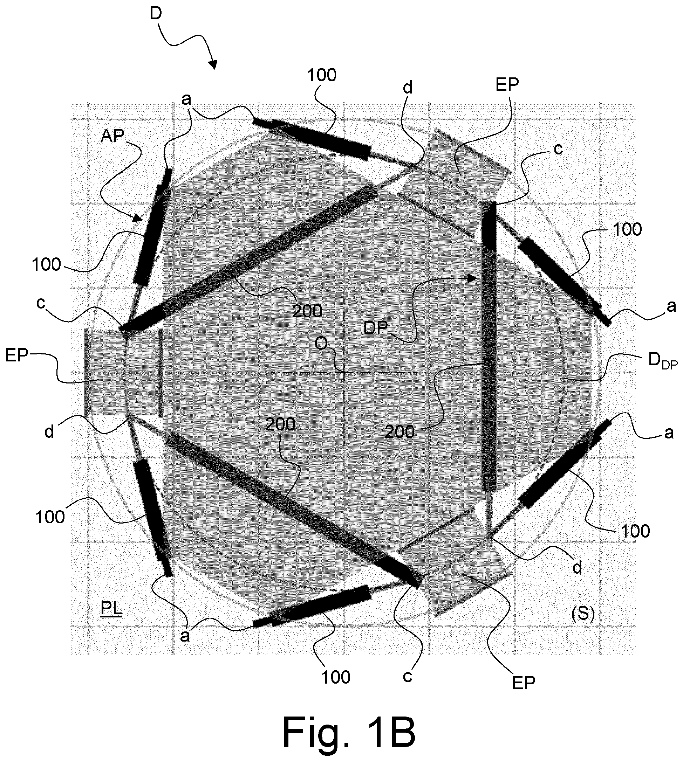

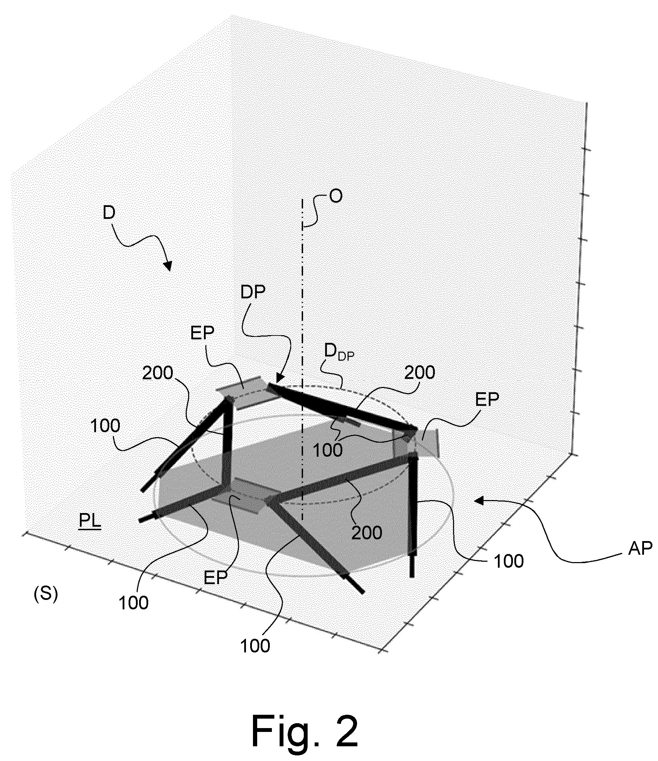

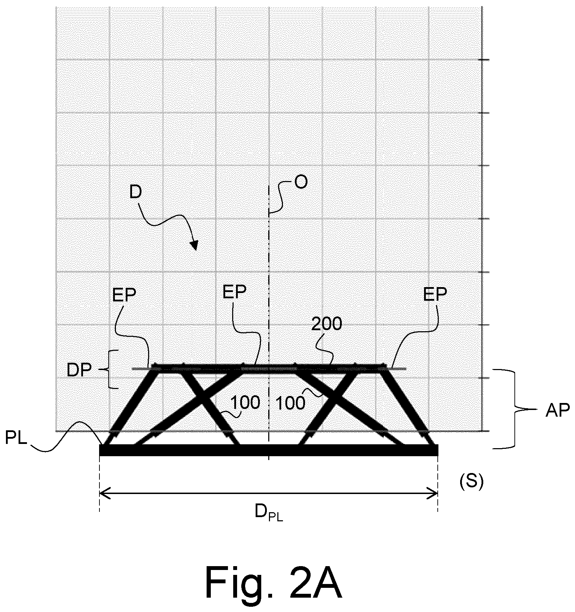

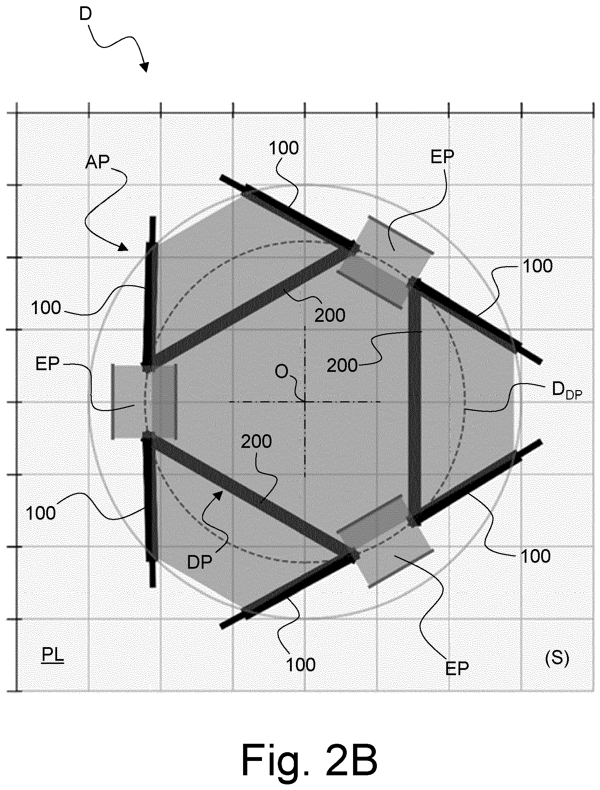

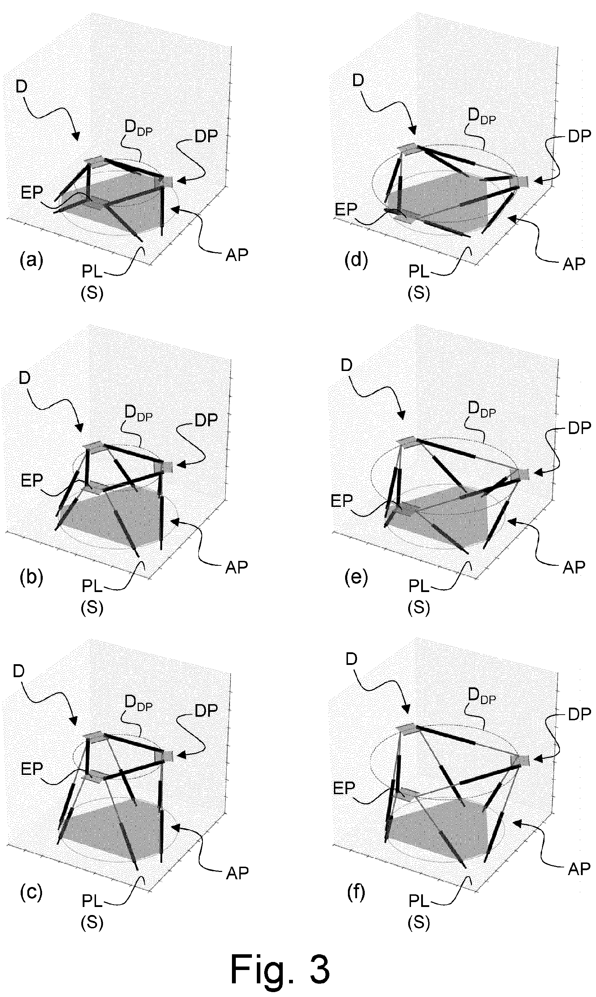

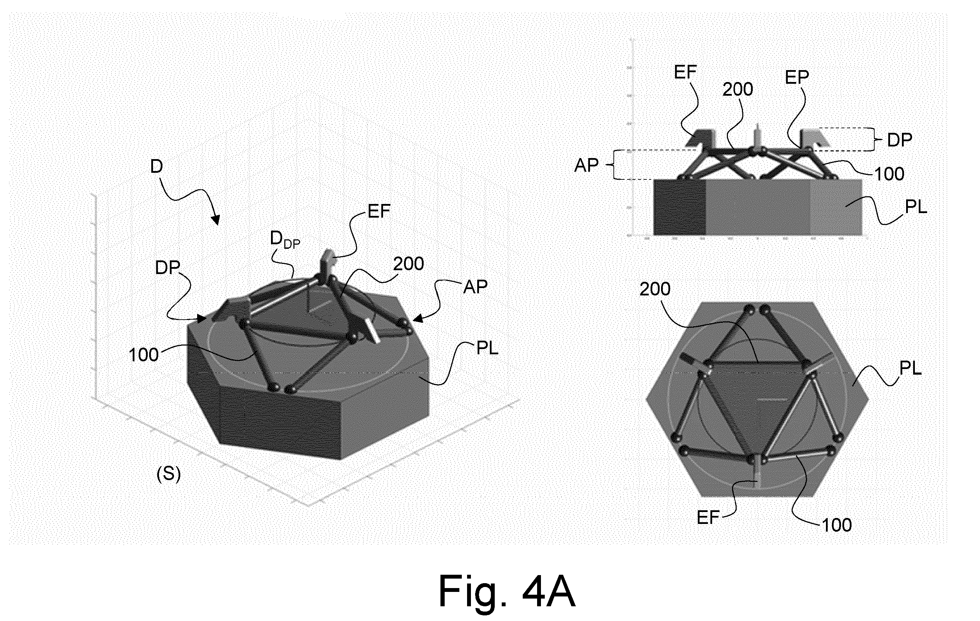

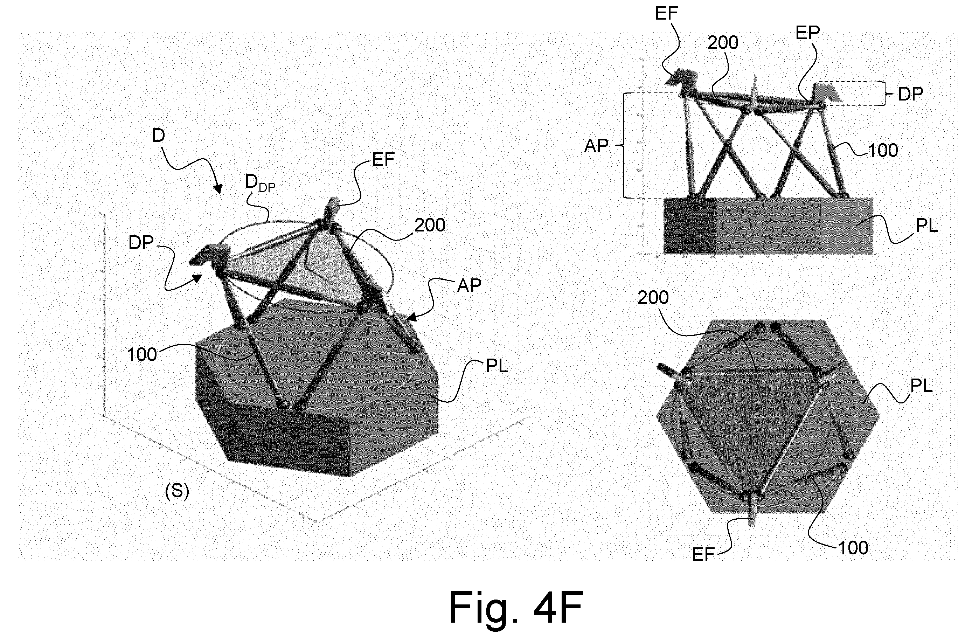

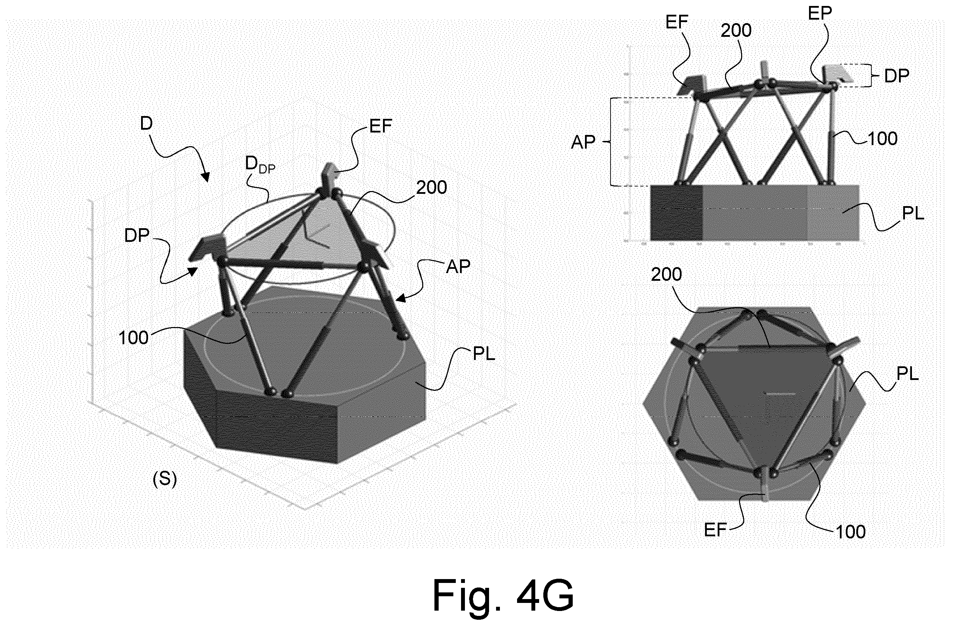

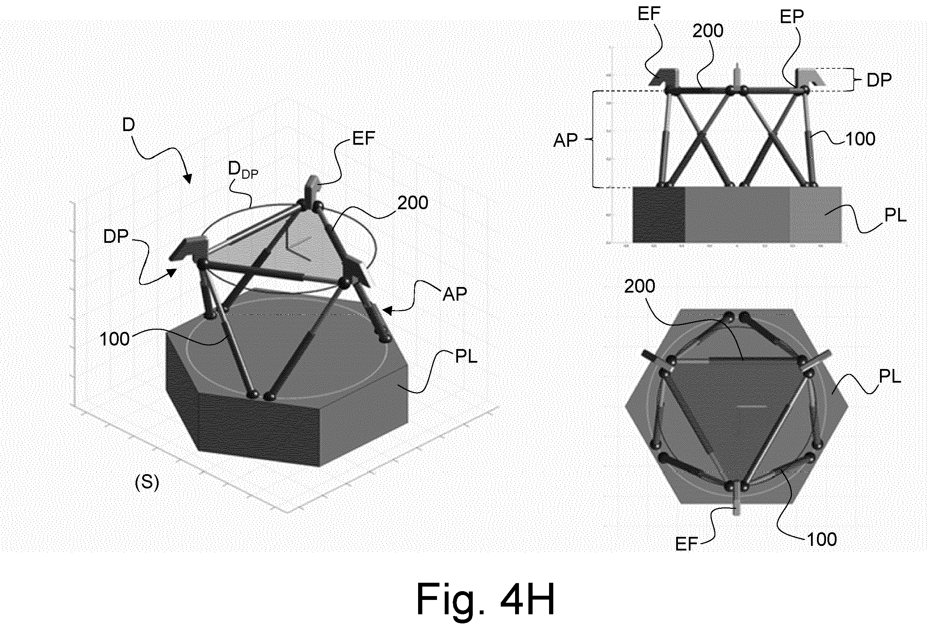

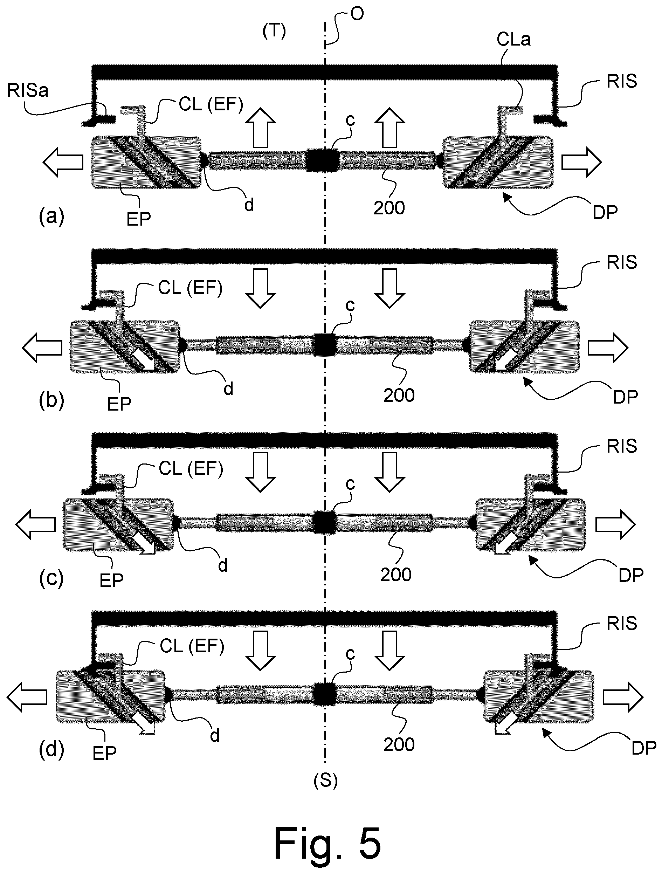

Figure 1 is a schematic perspective view illustrative of a spacecraft docking system, generally designated by reference sign D, in accordance with a preferred embodiment of the invention, which spacecraft docking system D is understood to be provided on a servicing spacecraft S (not shown), typically on a front face (or "X+" face) thereof. Figures 1A and 1B respectively show a side view and a top view of the spacecraft docking system D of Figure 1. The spacecraft docking system D is depicted in Figures 1 and 1A-B in a partly extended state for the sake of illustration, and basically consists of two main actuatable platforms, namely a first actuatable platform, referred to as "docking platform" DP, that is provided on top of a second actuatable platform, referred to as "supporting platform" AP. In the illustrated example, the actuatable docking platform DP is configured to cooperate with an annular capture feature of a target spacecraft T, not shown in Figure 1, namely a capture feature in the form of a ring interface structure (such as a launch adapter/interface ring, LAR/LIR). This capture feature of the target spacecraft T is schematically depicted e.g. in the illustration of Figure 5, where the ring interface structure is designated by reference sign RIS. The actuatable docking platform DP, per se, is designed to perform a docking operation between the service spacecraft S and the target spacecraft T, as this will be described hereafter with reference to the preferred embodiment of Figure 5. The illustrations of Figures 1 and 1A-B are schematic (much like those of Figures 2, 2A-B and 3) and part of the components of the actuatable docking platform DP have been omitted for the sake of simplification. It will be understood that the actuatable docking platform DP comprises a plurality of end platforms EP, schematically depicted as rectangular bounding boxes, each carrying an end effector (not shown in Figures 1, 1A-B, 2, 2A-B and 3) that is configured to interact with the ring interface structure RIS of the target spacecraft T. The end effectors, designated EF (see Figures 4A-J and 5) may include any adequate gripping or prehension element(s) for interacting with a desired portion of the ring interface structure RIS, be it e.g. an inner or outer side thereof. By way of preference, each end effector EF includes a gripping or clamping element that is used not only to grip a relevant portion of the ring interface structure RIS, but also to establish a secure connection between the ring interface structure RIS and the docking platform DP.

The actuatable docking platform DP further includes a corresponding plurality of docking actuators 200 designed to operate as actuatable prismatic joints, i.e. as one-degree-of-freedom (1-DoF) kinematic pairs allowing one movement in translation in a longitudinal direction. Each of the docking actuators 200 is coupled between a corresponding pair of the end platforms EP to form a polygonal arrangement. In the illustrated embodiment, the actuatable docking platform DP includes a total of three end platforms EP (and therefore three end effectors EF) and a total of three docking actuators 200 arranged in a triangular configuration on top of the supporting platform AP, as shown.

As schematically depicted in Figure 1B, a first end, designated c, of each of the docking actuators 200 is connected to a first end platform EP of the associated pair of end platforms EP via a fixed joint, while a second end, designated d, of each of the docking actuators 200 is connected to a second end platform EP of the associated pair of end platforms EP via a revolute joint.

Depending on the actuation state of the docking actuators 200, a nominal diameter D_{DP} of the actuatable docking platform DP, and thus of the end platforms EP and associated end effectors EF, can be adjusted, i.e. increased or decreased, within a certain operating range. To this end, the docking actuators 200 are actuatable jointly, i.e. all docking actuator 200 are actuated simultaneously to maintain symmetry and in such a way that a central axis O of the actuatable docking platform DP, i.e. a central axis O of the relevant polygonal (here triangular) arrangement formed by the end platforms EP and docking actuators 200, can be substantially aligned with a central axis of the ring interface structure RIS. One will thus understand that, assuming adequate alignment between the central axis O of the actuatable docking platform DP and the central axis of the ring interface structure RIS (as illustrated in Figure 5), simultaneous actuation of the docking actuators 200 leads to a displacement of the end platforms EP and associated end effectors EF substantially radially toward or away from the central axis O.

It will be appreciated that, depending on which portions of the ring interface structure RIS the docking platform DP is designed to interact with, the end effectors EF may extend radially outward (as schematically shown in Figures 4A-J and 5), beyond the nominal diameter D_{DP} of the actuatable docking platform DP, and/or radially inward, below the nominal diameter D_{DP} of the actuatable docking platform DP. This is schematically illustrated in Figures 1, 1A-B, 2, 2A-B and 3 by bounding boxes indicative of the possible length (in a radial direction) and width (in a tangential direction, transversely to the radial direction) of each end platform EP.

The actuatable docking platform DP is supported by the second actuatable platform, namely supporting platform AP, that is provided on a base platform PL of the servicing spacecraft S. In Figures 1, 1A-B, 2, 2A-B and 3, the base platform PL is schematically identified as a horizontal plane on which the supporting platform AP is provided. The supporting platform AP is coupled to the actuatable docking platform DP so as to allow a multi-degree-of-freedom (multi-DoF) displacement of the actuatable docking platform DP with respect to the base platform. In other words, the actuatable docking platform DP may not only be raised or lowered, within a certain operating range, with respect to the base platform PL, but can also be displaced in all directions transversely to the central axis O, as well as be inclined with respect to the base platform PL, within a certain range of motion. The supporting platform AP is advantageously designed to allow motion with six degrees of freedom.

The supporting platform AP comprises a plurality of (here six) supporting actuators 100 that are arranged in (three) sets or pairs and - much like the docking actuators 200 - are designed to operate as actuatable prismatic joints. Each pair of supporting actuators 100 is associated to a given one of the (three) end platforms EP, as shown. More specifically, each of the supporting actuators 100 is couped, at a first end, designated a, to the base platform PL and, at a second end, designated b, to the actuatable docking platform DP, namely a corresponding one of the end platforms EP. By way of preference, the first end a of each of the supporting actuators 100 is connected to the base platform PL via a universal joint, while the second end b of each of the supporting actuators 100 is connected to the associated end platform EP via a spherical joint.

The supporting platform AP is to a certain extent analogous to a Stewart-Gough platform, with a key difference however residing in that a docking actuator 200 is interposed between corresponding pairs of the end platforms EP, thus allowing selective extension or retraction of the actuatable docking platform DP on top of the supporting platform AP. In a conventional Stewart-Gough platform, the top platform per se is not extendable or retractable, and is merely orientable depending on the actuation state of the supporting actuators 100.

Figures 2 and 2A-B (see also Figure 3(a)) schematically show the spacecraft docking system D in a stowed configuration as adopted especially during launch of the servicing spacecraft S. In the stowed configuration, all supporting actuators 100 and docking actuators 200 are set to their minimum actuating state (or "zero state") to bring the whole docking system D to its most compact configuration, each actuator 100, 200 being in a fully retracted state, thus bringing both of the supporting platform AP and docking platform DP down toward the base platform PL of the servicing spacecraft S and within the smallest overall volume (or "stowage volume").

By way of illustration, assuming a base diameter D_{PL} of the order of 1.3 m, dimensions of the actuators 100, 200 and of the end platforms EP can be chosen so that the entire docking system D can fit, in the stowed configuration, inside a stowage volume of the order of less than 0.3 m in height and 1.3 m in diameter, i.e. about 0.4 m³. For the sake of illustration, assuming an effective actuator length (as measured between connection points c and d) of about 0.65 m (in the fully retracted state) and end platforms EP exhibiting a width (in the tangential direction) of about 0.2 m, the resulting nominal diameter D_{DP} of the docking platform DP in the stowed configuration amounts to about 0.88 m, largely within the aforementioned base diameter D_{PL}. These dimensional parameters are obviously purely illustrative and should not be considered as limiting the scope of the invention.

The dimensions of the relevant actuators 100, 200 and of the end platforms EP (and associated end effectors EF) as well as the range of motion of the actuators 100, 200 will be chosen according to the particular application requirements. Figure 3 is illustrative of possible ranges of motion of the docking system of Figures 1, 1A-B, 2 and 2A-B. Figure 3(a) schematically shows the docking system D in the stowed configuration (as shown in Figures 2 and 2A-B), while Figure 3(b)-(c) schematically shows the docking system D with supporting platform AP in a partly extended state (Figure 3(b)) and fully extended state (Figure 3(c)), the docking platform DP remaining in the retracted state (docking actuators 200 set to 0% extension). By way of comparison, Figure 3(d)-(f) schematically shows the docking platform DP in a fully extended state (docking actuators 200 moved to 100% extension), with the supporting platform AP being shown in a fully retracted state (Figure 3(d)), partly extended state (Figure 3(e)) and fully extended state (Figure 3(f)).

By way of illustration, in the fully extended state of the supporting platform AP, the docking platform DP can be raised to about 0.9 m above the base platform PL, while the docking platform DP can be widened, in its fully extended state to increase the nominal diameter D_{DP} of the docking platform DP to about 1.6 m. Starting from a stowed configuration of about 0.3 m in height, and a docking platform DP exhibiting an illustrative nominal diameter D_{DP} of about 0.88 m in the stowed configuration, one will thus appreciate that the full range of motion of the docking system D amounts to about 0.6 m in the axial direction (parallel to central axis O) and about 0.4 m in all radial directions in this illustrative example. This illustrative range of motion is adequate for allowing docking to a relatively large range of launch adapter/interface ring (LAR/LIR) diameters.

A further advantage of the present invention resides in that a clearance can be created inside the polygonal arrangement of the end platforms EP and docking actuators 200, the clearance being large enough to accommodate an engine exhaust nozzle of the target spacecraft T. Indeed, the target spacecraft T is typically provided with a propulsion engine, such as an apogee kick motor (AKM) or liquid apogee motor (LAM), exhibiting an exhaust nozzle that projects away from the target spacecraft T along the central axis of the ring interface structure RIS. In other words, the docking system D is advantageously configured to clear a path for the engine exhaust nozzle and prevent any interference therewith. Such clearance can advantageously be created by expanding the docking platform DP by an amount sufficient to accommodate the outer diameter of the engine exhaust nozzle. Likewise, the supporting platform AP can be extended along the axial direction to adequately accommodate the length of the engine exhaust nozzle.

Another advantage of using the 6-DoF supporting platform AP resides in the ability to tolerate misalignments both in translation and rotation in all directions. Feasibility studies demonstrate that misalignments' ranges of at least 100 mm in translation and at least 10° in rotation can be achieved thanks to the invention.

Figures 4A-J show various actuation states of a spacecraft docking system D in accordance with another illustrative embodiment of the invention. Components of the docking system D that have already been described hereabove are designated by the same reference signs, including the base platform PL of the servicing spacecraft S, the supporting platform AP with its supporting actuators 100, and the docking platform DP with its end platforms EP (inclusive end effectors EF) and docking actuators 200. In the illustrated example, end effectors EF are schematically illustrated as gripping elements that extend radially outward from the relevant end platforms EP in order to cooperate with an inner side of the relevant ring interface structure RIS of the target spacecraft T, not shown in Figures 4A-J.

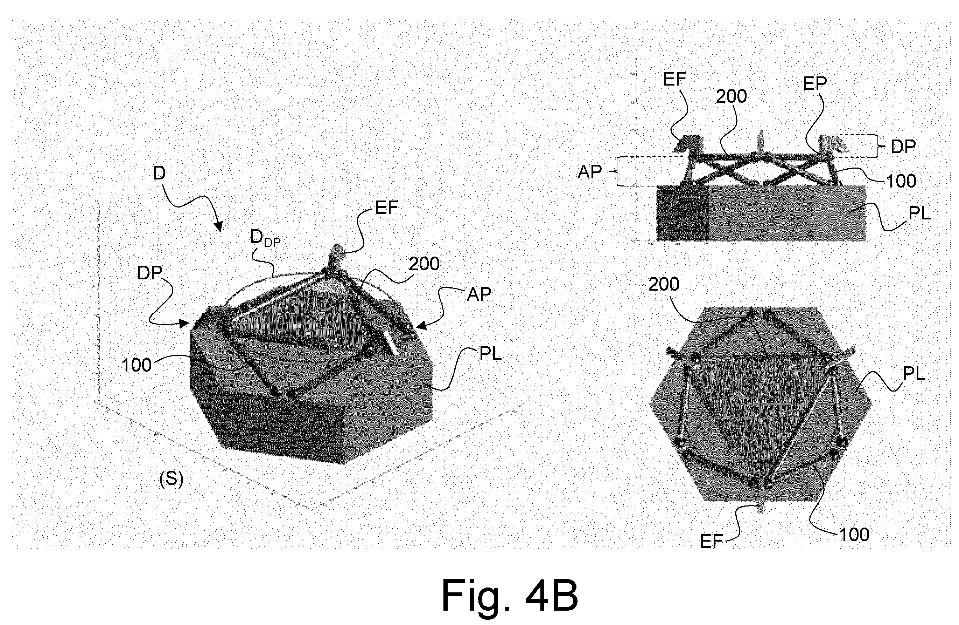

Figure 4A schematically shows the docking system D in the stowed configuration. Starting from this stowed configuration, Figure 4B schematically shows an unstowing manoeuvre during which the docking platform DP is expanded by actuating the docking actuators 200 to increase the clearance inside the polygonal arrangement of the end platforms EP and docking actuators 200. By way of illustration, the nominal diameter D_{DP} of the docking platform in increased as a result of the unstowing manoeuvre from e.g. about 0.8 m to about 1.07 m.

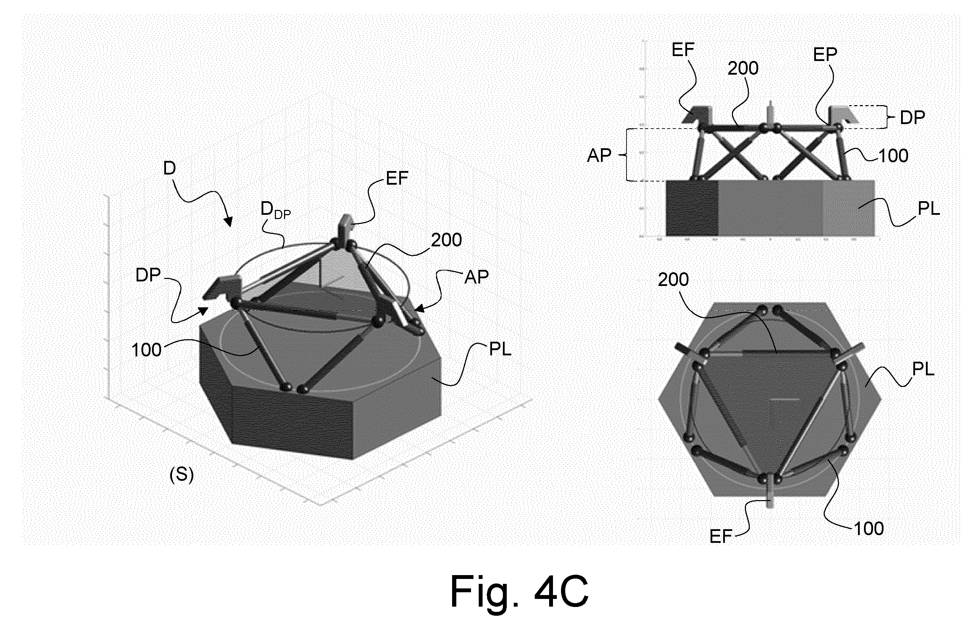

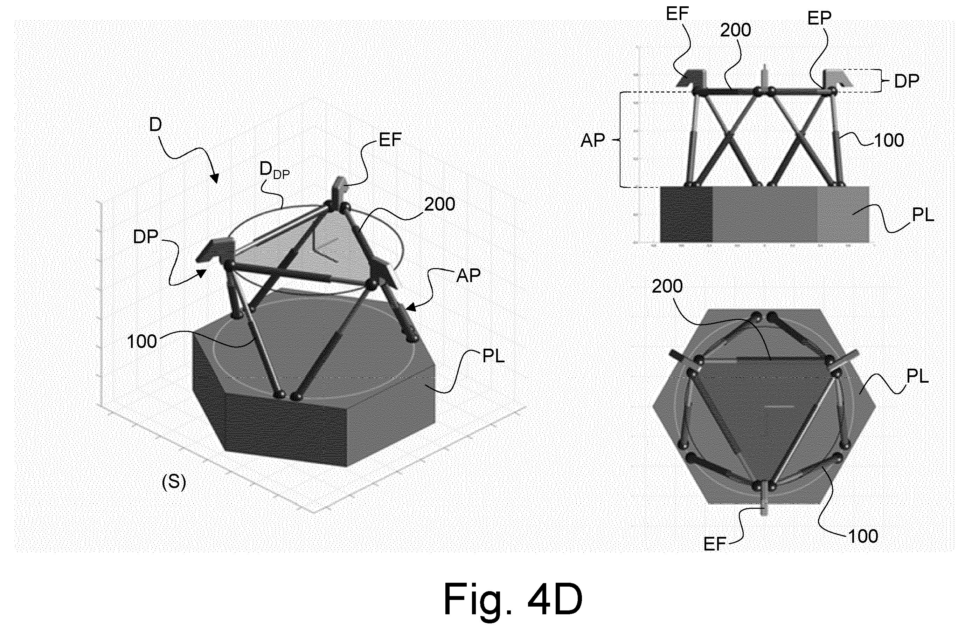

Figures 4C and 4D schematically show a raising manoeuvre during which the (expanded) docking platform DP in selectively raised using the supporting platform AP, namely by actuating the supporting actuators 100 to gradually extend the docking platform DP in the axial direction, for instance from about 0.3-0.4 m to about 0.8-0.9 m.

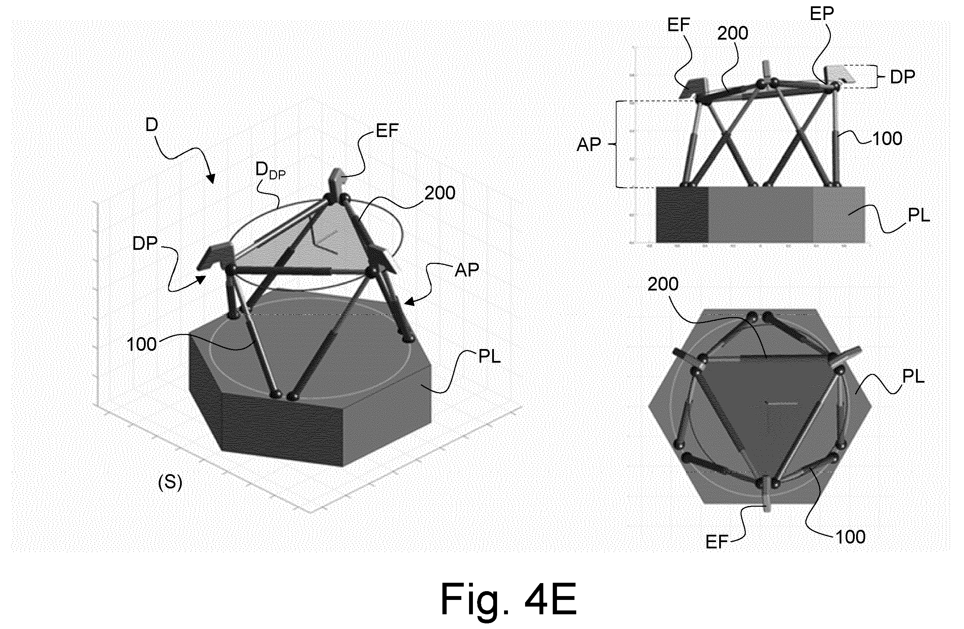

Figures 4E to 4H schematically show a centering/alignment manoeuvre during which the (expanded and extended) docking platform DP is translated and/or rotated to compensate for misalignments between the docking platform DP and the associated ring interface structure RIS. During this centering/alignment manoeuvre, the actuation state of supporting actuators 200 is adjusted to compensate for misalignments in translation and rotation within a range of about 100 mm in translations and 10° in tilt angles.

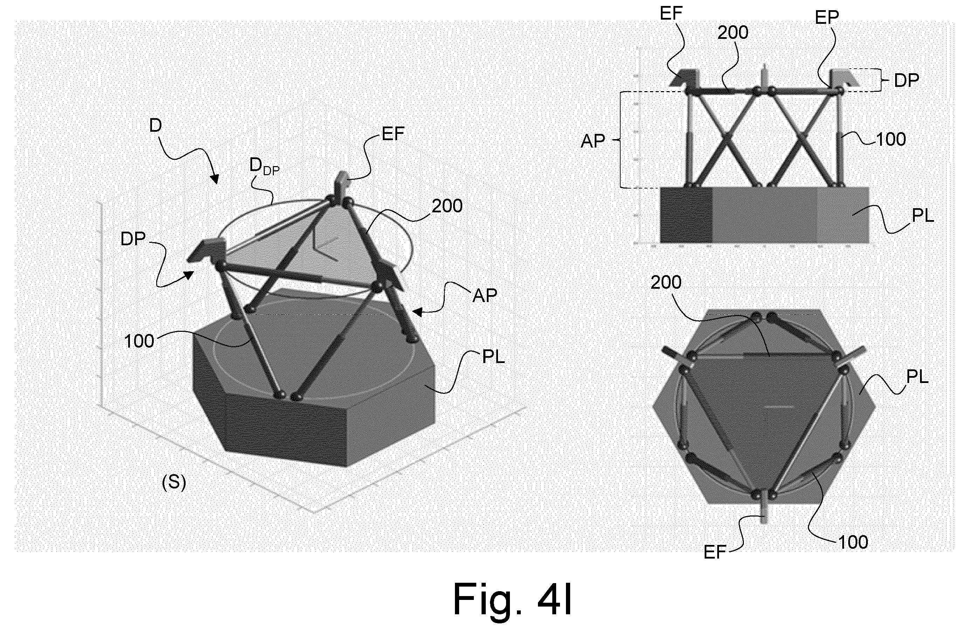

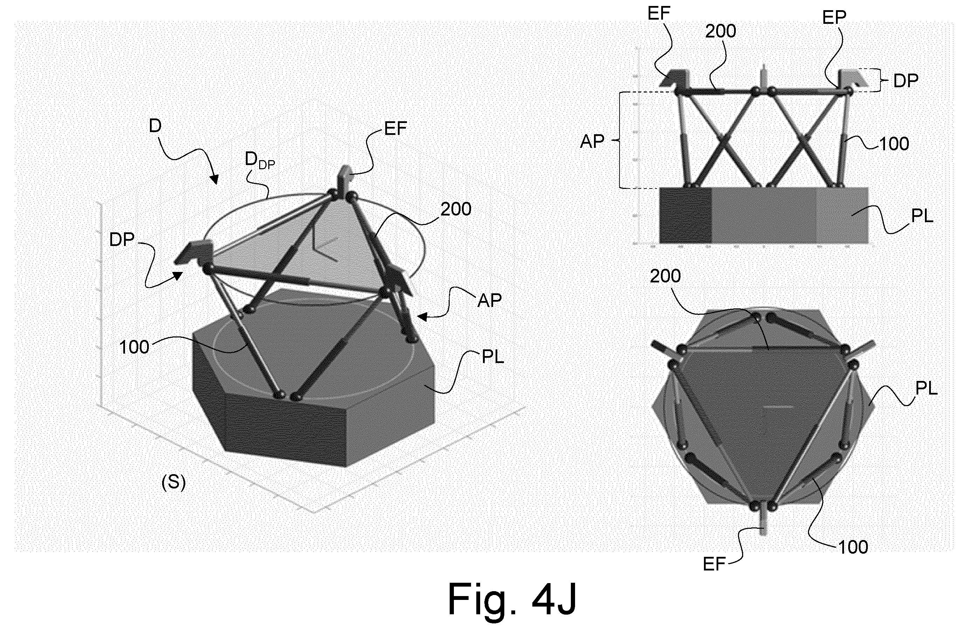

Once a proper alignment between the servicing spacecraft S and the target spacecraft T has been achieved and the docking platform DP is positioned within reach of the ring interface structure RIS (i.e. with the end effectors EF adequately positioned inside the ring interface structure RIS in the illustrated example - as shown e.g. in the illustrative example of Figure 5 discussed below), the actual docking manoeuvre can start, as schematically shown by Figures 4I and 4J. During this docking manoeuvre, the docking platform DP is expanded further by actuating the docking actuators 200 to move the end platforms EP and associated end effectors EF radially further outward to grasp and clamp onto the ring interface structure RIS. By way of illustration, the nominal diameter D_{DP} of the docking platform in increased further as a result of the docking manoeuvre from e.g. about 1.07 m to about 1.34 m.

Figure 5 schematically shows various actuation sates of an actuatable docking platform DP of a spacecraft docking system D in accordance with a preferred embodiment of the invention. In accordance with this preferred embodiment, the actuatable docking platform DP includes retractable clamping elements CL, acting as end effectors EF, that interact with, here, an inner side of the ring interface structure RIS during the docking operation. Figure 5 actually shows a cross-section of the docking platform DP taken through two of the clamping elements CL and associated end platforms EP, also showing one of the docking actuators 200 connected to each end platform EP. More specifically, Figure 5(a)-(d) show various actuations states of the actuatable docking platform DP as the end platforms EP are moved radially outward under the action of the docking actuators 200.

In the illustrated example, each clamping element CL is movably supported on the associated end platform EP so that radial interaction of the clamping elements CL with the (inner side) of the ring interface structure RIS upon performing the docking operation causes retraction of the clamping elements CL toward the end platforms EP (i.e. a downward movement of the clamping elements CL relative to the end platforms EP). In that regard, it should be appreciated that the clamping elements CL, per se, are passive mechanical elements that will in effect move as a result of expansion of the docking platform DP (under the action of the docking actuators 200) and the reactive forces exerted upon the clamping elements CL by the ring interface structure RIS upon the clamping elements CL interacting with the inner side of the ring interface structure RIS.

More specifically, in the illustrated example, each clamping element CL exhibits a clamping end CLa extending radially outward for cooperation with an inner lip RISa formed on the inner side of the ring interface structure RIS. It will be appreciated, however, that the clamping elements CL could alternatively be provided with a clamping end extending radially inward and designed to cooperate with an outer lip former on the outer side of the ring interface structure RIS. In effect, the clamping elements CL could be designed in any adequate manner to allow interaction with and clamping of corresponding portions of the ring interface structure RIS.

The clamping elements CL are advantageously supported onto the end platforms EP so as to slide along an inclined plane upon radial interaction of the clamping elements CL with the ring interface structure RIS. In the illustrated example, the clamping elements C are slidably engaged onto inclined guides that are oriented at substantially 45° with respect to a horizontal plane (perpendicularly to central axis O), each guide being inclined downward, away from the ring interface structure RIS, as one moves towards the central axis O. The clamping elements CL are urged upwards to their default, extended position, as shown in Figure 5(a), by adequate biasing means (not shown) and are initially moved radially outward, along with the end platforms EP, upon extension of the docking actuators 200. As soon as the clamping elements CL engage with the ring interface structure RIS, as shown in Figure 5(b), the ring interface structure RIS prevents further radial outward movement of the clamping elements CL. As the end platforms EP are further moved radially outward, this will cause the clamping elements CL to slide progressively along their respective inclined guides, as shown in Figure 5(c), thus lowering the clamping elements CL into the associated end platforms EP. As a result, the ring interface structure RIS is brought in abutment with the actuatable docking platform DP, as shown in Figure 5(d), namely with the upper surface of the end platforms EP, thereby establishing a secure connection between the ring interface structure RIS and the actuatable docking platform DP.

As a further measure, once the aforementioned docking manoeuvre is completed, the supporting platform AP could potentially be retracted in order to bring a distal, trailing edge of the engine exhaust nozzle in abutment with a corresponding supporting surface (not shown), either on the base platform PL directly or on a dedicated bearing structure provided on the base platform PL.

Various modifications and/or improvements may be made to the above-described embodiments without departing from the scope of the invention as defined by the appended claims.

For instance, while Figure 5 illustrates an embodiment wherein the end platforms EP are each provided with a clamping element CL designed to interact with an inner side of the ring interface structure RIS, namely with the inner lip RISa thereof, the clamping elements CL could alternatively be designed to interact with an outer side of the ring interface structure RIS. In such case, one will understand that operation of the docking platform during the docking manoeuvre would be reversed, i.e. the end platforms EP would initially be positioned around the ring interface structure RIS, beyond the outer periphery thereof, and then progressively retracted to bring the clamping elements CL in contact with the relevant portions of the outer side of the ring interface structure RIS. Furthermore, the inclined guides would likewise have to be arranged in a reversed manner to what is shown in Figure 5, namely inclined downward, away from the ring interface structure RIS, as one moves away from the central axis O. In this way, one ensures that radial inward movement of the end platforms EP will cause the clamping elements CL to likewise slide progressively along their respective inclined guides, thus lowering the clamping elements CL into the associated end platforms EP, and bringing the ring interface structure RIS in abutment with the actuatable docking platform DP.

The docking platform and clamping elements could also be configured to be able to interact with either one or both of the inner and outer sides of the relevant ring interface structure RIS, if required or desired.

Furthermore, while the multi-DoF supporting platform AP preferably includes a plurality of supporting actuators 100 arranged in pairs and designed to operate as actuatable prismatic joints (which constitutes a first aspect of the invention that is presently claimed), other types of multi-DoF supporting platforms could potentially be contemplated. For instance, the six-arm articulated linkage taught in International (PCT) Publication No. WO 2021/123632 A1 could potentially be adapted to fit and support the actuatable docking platform DP, while retaining the ability to allow a displacement of the docking platform in six degrees of freedom, hence the second aspect of the invention that is claimed separately from the first aspect and focusses on the preferred configuration of the actuatable docking platform. As a matter of fact, in accordance with a variant, the supporting platform may also be entirely passive and devoid of any actuation function. In such case, the supporting actuators may perfectly be replaced by rigid links with end joints at both ends for supporting the docking platform onto the base platform of the servicing spacecraft, in which case actuation of the docking system is limited to actuation of the docking platform per se. The use of a non-actuated supporting platform is therefore also contemplated as a possible embodiment of the second aspect of the invention as generally defined in independent claim 5, as an alternative to the use of an actuated supporting platform as described with reference to Figures 1 to 4A-J hereof.

In addition, while embodiments of the docking system have been described in relation to the capture of a ring interface structure of the target spacecraft, the docking system of the invention could perfectly be adapted to capture any other suitable capture feature of the target spacecraft, including other annular or circular capture features, such as the distal, trailing edge of an engine exhaust nozzle of the target spacecraft, or any other suitable capture feature, such as separation bolts, hold down and release mechanisms (HDRM) and the like.

Moreover, one or more of the end effectors may be configured as passive hook or retaining members designed to interact with the relevant capture feature of the target spacecraft, without any particular grasping or gripping function, while one or more of the remaining end effectors may be designed and operated as actuatable grippers to actively grasp or grip part of the relevant capture feature. In that regard, it should be understood that not at all of the end effectors need to embody an active grasping or gripping function. Referring to the embodiment of Figure 5 discussed previously, one will again understand that the relevant clamping elements are passive per se, but nevertheless provide a grasping or gripping function as a result of actuation of the docking platform.

Lastly, the polygonal arrangement formed by the docking actuators could be a regular polygon (triangle, square, pentagon, hexagon, etc. depending on the actual number of docking actuators), which is particularly suitable for interaction with annular or circular capture features, or any arbitrary polygon for cooperation with dedicated capture features, such as separation bolts or hold down and release mechanisms (HDRM). A regular arrangement of the docking actuators however remains a preferred solution.

### LIST OF REFERENCE NUMERALS AND SIGNS USED THEREIN

- S: servicing spacecraft
- D: spacecraft docking system provided on e.g. front face of servicing spacecraft S
- T: target spacecraft
- RIS: capture feature, in particular ring interface structure of target spacecraft T (e.g. launch adapter/interface ring, LAR/LIR)
- RISa: (inner) lip formed on (e.g. inner side) of ring interface structure RIS
- PL: base platform of spacecraft docking system D
- AP: actuatable supporting platform of spacecraft docking system D
- 100: supporting actuators of actuatable supporting platform AP (actuatable prismatic joints, e.g. linear actuators)
- a: (first) end of supporting actuator 100 connected to base platform PL (universal joint)
- b: (second) end of supporting actuator 100 connected to end platform EP (spherical joint)
- DP: actuatable docking platform of spacecraft docking system D
- EP: end platforms of actuatable docking platform DP, each carrying end effector EF
- 200: docking actuators of actuatable docking platform DP (actuatable prismatic joints, e.g. linear actuators)
- c: (first) end of docking actuator 200 connected to a first end platform EP (e.g. fixed joint)
- d: (second) end of docking actuator 200 connected to a second end platform EP (e.g. revolute joint)
- EF: end effectors provided on end platforms EP and configured to interact with (inner or outer side) of ring interface structure RIS
- CL: clamping element of end effector EF (movably supported on associated end platform EP)
- CLa: clamping end of clamping element CL for cooperation with inner lip RISa formed on (e.g. inner side) of ring interface structure RIS
- D_{DP}: nominal diameter of actuatable docking platform DP and end effectors EF
- O: central axis of actuatable docking platform DP / central axis of polygonal arrangement formed by end platforms EP and docking actuators 200
- D_{PL}: base diameter of base platform PL

## Claims

1. A spacecraft docking system (D) for capturing and coupling a target spacecraft (T) to a servicing spacecraft (S) that is provided with the spacecraft docking system (D), the target spacecraft (T) having a capture feature (RIS),
wherein the spacecraft docking system (D) includes:
an actuatable docking platform (DP) configured to cooperate with the capture feature (RIS) of the target spacecraft (T) to perform a docking operation between the servicing spacecraft (S) and the target spacecraft (T); and
a supporting platform (AP) provided on a base platform (PL) of the servicing spacecraft (S), the supporting platform (AP) being coupled to the actuatable docking platform (DP) so as to allow a multi-degree-of-freedom displacement of the actuatable docking platform (DP) with respect to the base platform (PL),
**characterized in that** the supporting platform (AP) comprises a plurality of supporting actuators (100) and designed to operate as actuatable prismatic joints, each of the supporting actuators (100) being coupled, at a first end (a), to the base platform (PL) and, at a second end (b), to the actuatable docking platform (DP),
**in that** the actuatable docking platform (DP) comprises a plurality of end platforms (EP), each carrying an end effector (EF) configured to interact with the capture feature (RIS) of the target spacecraft (T), and a corresponding plurality of docking actuators (200) designed to operate as actuatable prismatic joints, each of the docking actuators (200) being coupled between a corresponding pair of said end platforms (EP) to form a polygonal arrangement,
and **in that** each end platform (EP) is coupled to the second end (b) of a corresponding set of said supporting actuators (100).

2. The spacecraft docking system (D) according to claim 1, wherein the supporting platform (AP) includes a total of six said supporting actuators (100) arranged in three pairs,
and wherein the actuatable docking platform (DP) includes a total of three said end platforms (EP) and a total of three said docking actuators (200) arranged in a triangular configuration on top of the supporting platform (AP).

3. The spacecraft docking system (D) according to claim 1 or 2, wherein the first end (a) of each of the supporting actuators (100) is connected to the base platform (PL) via a universal joint,
and wherein the second end (b) of each of the supporting actuators (100) is connected to the associated end platform (EP) via a spherical joint.

4. The spacecraft docking system (D) according to any one of the preceding claims, wherein each of the supporting actuators (100) and docking actuators (200) includes an electromechanical linear actuator.

5. A spacecraft docking system (D) for capturing and coupling a target spacecraft (T) to a servicing spacecraft (S) that is provided with the spacecraft docking system (D), the target spacecraft (T) having a capture feature (RIS),
wherein the spacecraft docking system (D) includes:
an actuatable docking platform (DP) configured to cooperate with the capture feature (RIS) of the target spacecraft (T) to perform a docking operation between the servicing spacecraft (S) and the target spacecraft (T); and
a supporting platform (AP) provided on a base platform (PL) of the servicing spacecraft (S) to support the actuatable docking platform (DP),
**characterized in that** the actuatable docking platform (DP) comprises a plurality of end platforms (EP) coupled to the supporting platform (AP), each carrying an end effector (EF) configured to interact with the capture feature (RIS) of the target spacecraft (T), and a corresponding plurality of docking actuators (200) designed to operate as actuatable prismatic joints, each of the docking actuators (200) being coupled between a corresponding pair of said end platforms (EP) to form a polygonal arrangement,
and **in that** the docking actuators (200) are actuatable to adjust a position of the end effectors (EF) relative to the capture feature (RIS).

6. The spacecraft docking system (D) according to claim 5, wherein the actuatable docking platform (DP) includes a total of three said end platforms (EP) and a total of three said docking actuators (200) arranged in a triangular configuration.

7. The spacecraft docking system (D) according to claim 5 or 6, wherein each of the docking actuators (200) includes an electromechanical linear actuator.

8. The spacecraft docking system (D) according to any one of the preceding claims, wherein the capture feature is an annular or circular capture feature (RIS), such as a ring interface structure (RIS), and wherein the docking actuators (200) are actuatable jointly to adjust a nominal diameter (D_{DP}) of the actuatable docking platform (DP) and of the end effectors (EF) relative to a diameter of the capture feature (RIS).

9. The spacecraft docking system (D) according to claim 8, wherein each of the end effectors (EF) is configured to interact with an inner side of the capture feature (RIS),
wherein the docking actuators (200) are actuatable jointly so that the nominal diameter (D_{DP}) of the actuatable docking platform (DP) and of the end effectors (EF) is adjusted to a first diameter allowing insertion of the end effectors (EF) inside the capture feature (RIS), within an operating range of the end effectors (EF),
and wherein the docking actuators (200) are actuatable jointly so that the nominal diameter (D_{DP}) of the actuatable docking platform (DP) and of the end effectors (EF) can be increased from the first diameter to cause the end effectors (EF) to interact radially with the inner side of the capture feature (RIS).

10. The spacecraft docking system (D) according to claim 8 or 9, wherein each of the end effectors (EF) is configured to interact with an outer side of the capture feature (RIS),
wherein the docking actuators (200) are actuatable jointly so that the nominal diameter (D_{DP}) of the actuatable docking platform (DP) and of the end effectors (EF) is adjusted to a first diameter allowing insertion of the capture feature (RIS) between the end effectors (EF), within an operating range of the end effectors (EF),
and wherein the docking actuators (200) are actuatable jointly so that the nominal diameter (D_{DP}) of the actuatable docking platform (DP) and of the end effectors (EF) can be decreased from the first diameter to cause the end effectors (EF) to interact radially with the outer side of the capture feature (RIS).

11. The spacecraft docking system (D) according to any one of claims 8 to 10, wherein each of the end effectors (EF) includes a clamping element (CL) designed to interact with the capture feature (RIS),
and wherein each clamping element (CL) is movably supported on the associated end platform (EP) so that radial interaction of the clamping elements (CL) with the capture feature (RIS) upon performing the docking operation causes retraction of the clamping elements (CL) toward the end platforms (EP), thereby bringing the capture feature (RIS) in abutment with the actuatable docking platform (DP).

12. The spacecraft docking system (D) according to claim 11, wherein each clamping element (CL) is movably supported on the associated end platform (EP) so as to slide along an inclined plane upon radial interaction of the clamping elements (CL) with the capture feature (RIS).

13. The spacecraft docking system (D) according to any one of the preceding claims, wherein a first end (c) of each of the docking actuators (200) is connected to a first end platform (EP) of the associated pair of end platforms (EP) via a fixed joint,
and wherein a second end (d) of each of the docking actuators (200) is connected to a second end platform (EP) of the associated pair of end platforms (EP) via a revolute joint.

14. The spacecraft docking system (D) according to any one of the preceding claims, wherein the actuatable docking platform (DP) is configured such that a clearance can be created inside the polygonal arrangement of the end platforms (EP) and docking actuators (200), the clearance being large enough to accommodate an engine exhaust nozzle of the target spacecraft (T).

15. A method of capturing and coupling a target spacecraft (T) to a servicing spacecraft (S), the target spacecraft (T) having a capture feature, in particular an annular or circular capture feature such as a ring interface structure (RIS), the method comprising the following steps:
- providing the servicing spacecraft (S) with a spacecraft docking system (D) in accordance with any one of the preceding claims;
- manoeuvring the servicing spacecraft (S) to perform a rendezvous with the target spacecraft (T);
- positioning the servicing spacecraft (S) relative to the target spacecraft (T) to bring the capture feature (RIS) of the target spacecraft (T) within operating range of the spacecraft docking system (D);
- positioning the actuatable docking platform (DP) of the spacecraft docking system (D) relative to the capture feature (RIS) of the target spacecraft (T) to bring the capture feature (RIS) within operating range of the actuatable docking platform (DP); and
- actuating the actuatable docking platform (DP) to cooperate with the capture feature (RIS) of the target spacecraft (T).
